Europäisches Patentamt

European Patent Office

Office européen des brevets

(11) Publication number: 0 359 564
A2

# (12) EUROPEAN PATENT APPLICATION

(21) Application number: 89309336.9

(22) Date of filing: 14.09.89

(51) Int. Cl.5: **C 03 B 9/12**
**C 03 C 17/04**

(30) Priority: 16.09.88 GB 8821771
16.09.88 GB 8821800

(43) Date of publication of application:
21.03.90 Bulletin 90/12

(84) Designated Contracting States:
AT BE CH DE ES FR GB GR IT LI LU NL SE

(71) Applicant: GLASS BULBS LIMITED
Harworth
Doncaster South Yorkshire DN11 8NF (GB)

(72) Inventor: Cox, William Aired Lawrence
Pear Tree Farm
Everton Doncaster South Yorkshire (GB)

Rose, Michael John
33 Saxton Avenue
Bessacarr Doncaster South Yorkshire (GB)

(74) Representative: Fleming, Ian Alexander et al
THORN EMI Patents Limited The Quadrangle Westmount
Centre Uxbridge Road
Hayes Middlesex, UB4 0HB (GB)

(54) A method of manufacturing a light diffusing glass envelope.

(57) A method of manufacturing a light diffusing glass envelope
includes the step of producing a glass envelope at an elevated
temperature. Particles of a powder are electrostatically de-
posited onto the internal surface of the glass envelope while it is
at this elevated temperature. The particles are formed of an
inorganic material that softens at this elevated temperature and
so the particles adhere to the internal surface of the glass
envelope to form a coating.

FIG 2

**Description**

## A METHOD OF MANUFACTURING A LIGHT DIFFUSING GLASS ENVELOPE

This invention relates to a method of manufacturing a light diffusing glass envelope having a light diffusing coating.

Such a method can advantageously be applied using the apparatus disclosed and claimed in our co-pending European Patent Application claiming priority from GB Patent Application Nos. 8821777.3 and 8821800.3.

It is common practice in the manufacture of incandescent lamp bulbs for the glass envelope of the bulb to be manufactured by a specialist glass manufacturer and then formed into a finished lamp bulb, i.e. with the filament and glass flare sealed into the neck of the envelope by the lamp manufacturer.

Conventionally, the internal surface of a glass envelope may be modified by acid etching to produce a light diffusive effect, such as in a conventional pearl bulb. A gradual reduction in the degree of acid etching results in a gradual reduction in the amount of diffusion, producing effects such as the 'satin frost' and 'light diffuse' finishes. The objectives of having a light diffusive effect are to diffuse the light from the filament, so as to obscure the filament, without losing significant amounts of light (lumen efficiency).

However, acid etching cannot provide coloured or other special effects. Furthermore, the process of acid etching is both expensive and hazardous because of the materials, such as hydrofluoric acid based liquors, used.

Light diffusive and other special effects can also be produced by the provision of a coating of powder on the internal surface of a glass envelope. The powder can be precipitated out from a solution introduced into the glass envelope but this involves the complication of the introduction of solvents and binders into the glass envelope.

Alternatively, the powder can be electrostatically deposited onto the internal surface of the glass envelope. It is known, e.g. as disclosed in US 2,922,065 (Meister et al), to deposit the powder as a dry powder, the powder particles being attracted and adhering to the internal surface of the glass envelope under the influence of a potential difference between the surface and the particles. The powder particles are forced through a nozzle and so frictionally charged. A potential difference of the order of 8 to 25kV is maintained between the glass envelope and the powder particles as they emerge from the nozzle. Prior to and during deposition, the glass envelope is heated to a temperature typically in the range of 70°C to 300°C, the heating renders the glass envelope electrically conductive and so neutralises the charge on the powder particles as they are deposited on the glass envelope. However, a coating produced by this method can be rubbed off quite easily.

Also, US 2,922,065 is primarily concerned with lumen maintenance. This aside, the basic problem is to provide a diffusive coating that adequately diffuses the light and hides the filament without greatly decreasing lumen output. The coating must be sufficiently, but not overly, thick and must adhere during further manufacturing operations and during use. US 4,081,709 (Collins et al) discloses a method of electrostatically depositing a coating in which the resistivity of the powder particles used is critical, being in the range of $10^8$ to $10^{11}$ cm. This method also uses a potential difference typically in the range of 26 to 33kV in contrast to the method of US 2,911,065 which uses a potential difference in the order of 8 to 25kV.

GB 2040279A (Egyesult) discloses a process for improved coatings of electric light source envelopes involving, inter alia, electrostatic deposition of a powder. This document addresses the problem of adhesion of the deposited pigment and teaches that up to that time, satisfactory adhesion could be attained only at the price of eg an additional heat treatment at high temperatures subsequent to the deposition of the coating, which treatment is detrimental to the optical parameters of the coated layer and restricts the applicability of the process. The document teaches that in order to overcome this problem, a pretreatment of the pigment grains to be used for coating, preceding the coating process itself, is necessary. The pigment to be deposited is coated with a glass compound (glass precursor), formed in an organic solvent, which affords good adhesion. The deposited coated pigment can then be heated at a temperature which is lower than the softening point of the material of the envelope to produce the finished article.

It is an object of the present invention to provide an improved method of depositing a light diffusing coating on the internal surface of a glass envelope.

According to the present invention, there is provided a method of manufacturing a light diffusing glass envelope including the steps of:
producing a glass envelope at an elevated temperature;
and electrostatically depositing particles of a powder on the internal surface of said glass envelope at said elevated temperature;
wherein said powder comprises an inorganic material that softens at said elevated temperature, whereby said particles adhere to said internal surface to form a coating.

Such a method provides a coating with a high degree of adherence to the glass envelope, such that the coating can be rubbed quite hard without danger of it becoming detached, in contrast to coatings produced by the majority of prior art methods.

An embodiment of the invention will now be described, by way of example only and, with reference to the accompanying drawings in which:
    Figure 1 shows, schematically, an apparatus provided in accordance with the present invention;
    Figure 2 shows means for electrostatically coating the internal surface of a glass envelope including nozzle assemblies;

Figures 3 and 4 show respectively a section and a side view of one of the nozzle assemblies of Figure 2;

Figure 5 shows a smoke generator; and

Figure 6 shows the association of a nozzle assembly and a smoke distribution chamber.

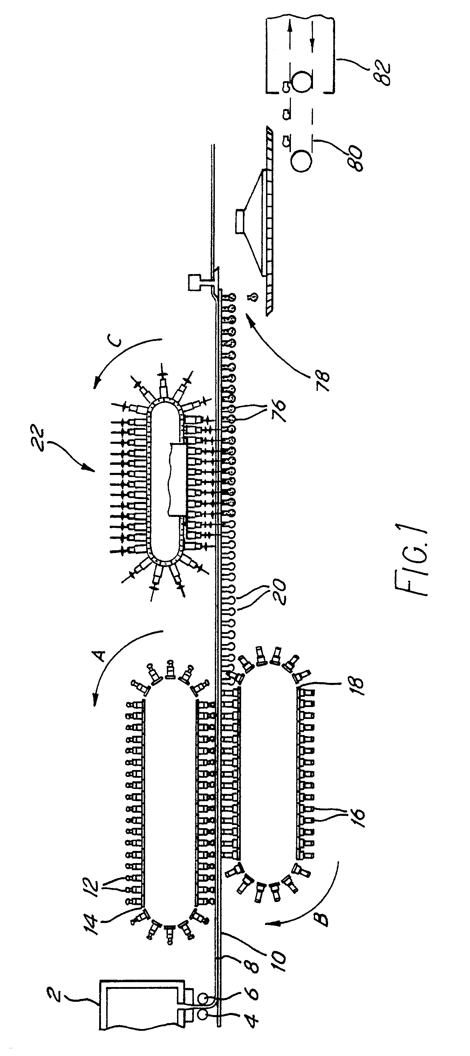

As shown in Figure 1, the apparatus comprises a furnace 2 which produces a controlled flow of softened glass at a temperature typically in the range of from 950°C to 1150°C. The softened glass passes between water-cooled shaped rollers 4, 6 which form the glass into a thin layer 8, termed a 'ribbon' having regularly spaced thicker regions, termed 'biscuits'. The ribbon 8 is picked up by a horizontal endless belt 10, having holes, so positioned that each biscuit falls over a hole in the belt 10. As the belt 10 travels, each biscuit sags through its respective hole and begins to take on a bulbous shape.

The ribbon 8 passes between a plurality of blow heads 12 mounted on an endless chain 14 and a plurality of rotating bulb moulds 16 mounted on an endless chain 18. The endless chains 14, 18 move in the directions indicated by the arrows A, B. The movement of the belt 10 and chains 14, 18 is synchronised such that respective blow heads 12, holes (not shown) in the belt, biscuits (not shown) and bulb moulds 16 coincide. When they coincide, a jet of a gas, such as air, from a blow head 12 is produced and blows the respective biscuit of the ribbon 8 into the respective bulb mould 16 which has been sprayed with water. The steam cushion thus formed between the glass and the mould 16 leaves the formed glass envelope 20 with a polished surface while the rotation eliminates mould seams. The particular bulb moulds 16 used depend on the shape of the glass envelope required.

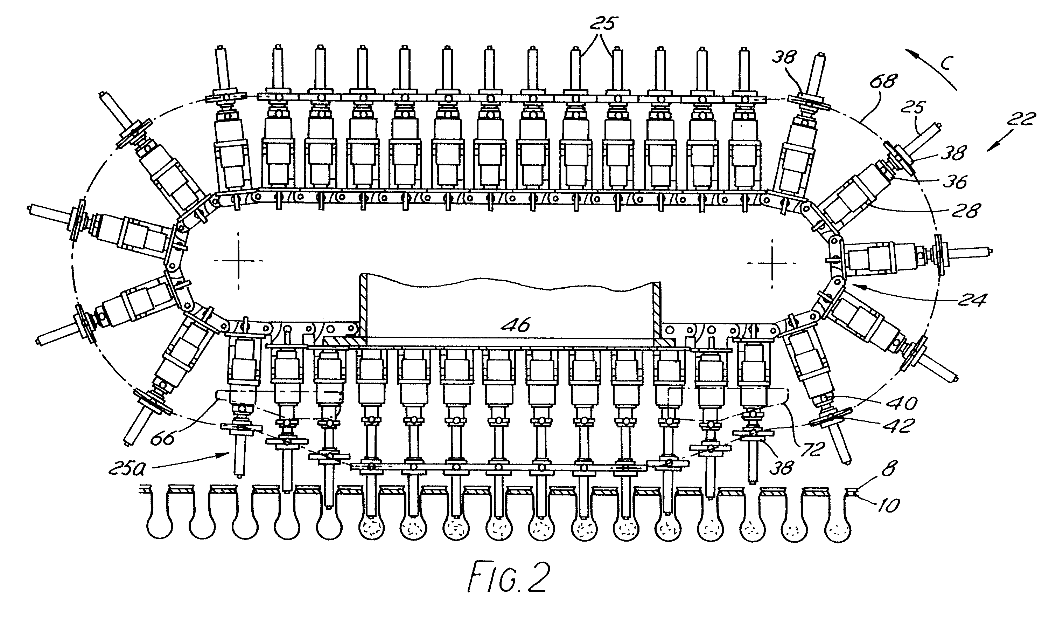

The endless belt 10 carries the formed glass envelopes 20 to means 22 for electrostatically coating the internal surface of the glass envelopes. At this stage, the glass envelopes have a temperature in the range of from 550°C to 750°C. As shown also in Figure 2 (in greater detail), the means 22 comprises an endless chain 24 moving in the direction indicated by the arrow C. The endless chain 24 carries a plurality of nozzle assemblies 25; 35 nozzle assemblies are shown in the Figure.

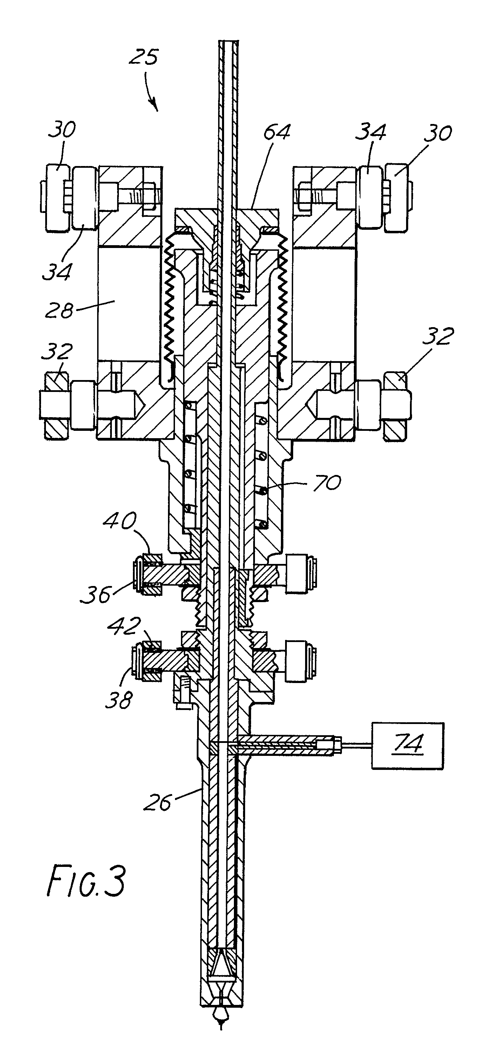

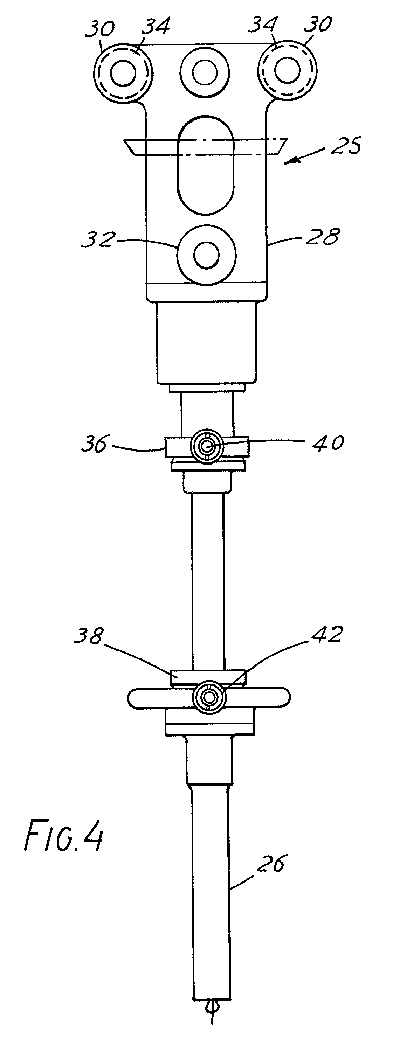

As shown in Figures 3 and 4, a nozzle assembly 25 comprises a nozzle 26 which is carried on a carrier 28. The carrier 28 is supported by rollers 30 and stabilised by rollers 32. The support rollers 30 and stabilising rollers 32 each run in their own guide tracks (not shown). The carrier 28 is driven by a sprocket engaging on drive rollers 34 of which there are three mounted on each side of the carrier 28. To form the endless chain 24 each carrier 18 is machined to allow the adjacent carrier to interlink, the support roller axles providing the link between adjacent carriers.

Associated with each nozzle 26 and carrier 18 are a first stage 36 and a second stage 38 which carry respective rollers 40, 42. The rollers 40, 42 are effective as cam followers to interact with cams to control movement of the nozzles 26 towards and away from the belt 10.

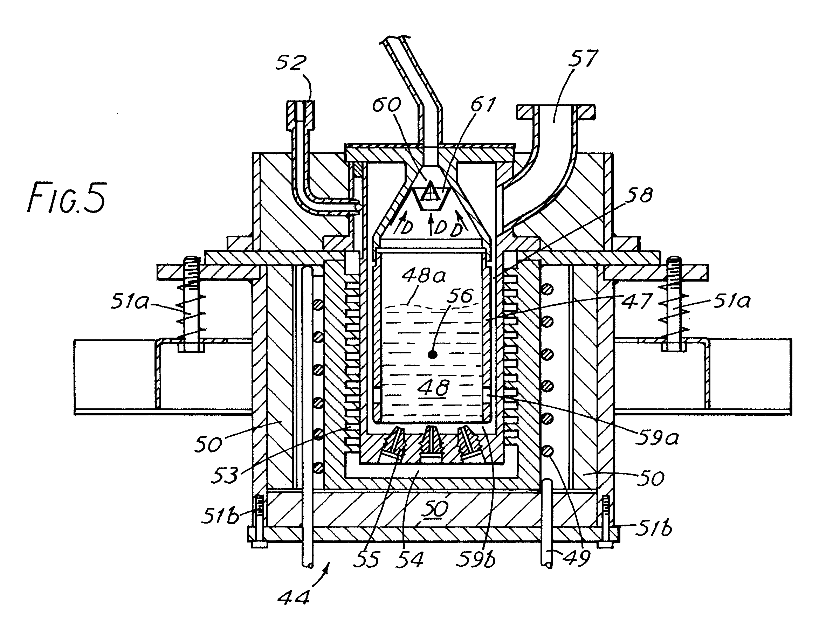

The powder used to coat the glass envelopes 20 is stored in a bulk storage facility (not shown) and automatically supplied, e.g. by a screw feed, to a smoke generator 44 (shown in Figure 5) and thence to a distribution chamber 46 (the position of which is shown in Figure 2). Figure 5 shows the detail of the smoke generator 44.

A smoke generator assembly 44 has a main body 47 for containing glass powder 48 and gas. A metal clad heating element 49 surrounds the body 47, maintaining the body 47 and its contents at an elevated temperature the whole being surrounded by heat insulation 50. Springs 51a, 51b are provided to enable the assembly to be vibrated during operation.

Pressurized air is fed into the smoke generator via an inlet 52 and a spiral groove 53 that runs around the outside of the main body 47. Passage of air through the groove 53 allows the air to be preheated to an elevated temperature prior to its injection into the main body 47 via a manifold 54 and nozzles 55. The Figure shows three nozzles 55 directed towards a point 56. The number of nozzles 55, their arrangement and so the number of points 56 provided in a generator assembly depends on the configuration of the generator.

Fresh spray powder is metered into the top of the generator at an inlet 57. The powder passes down a channel 58 outside the body 47 due to vibration of the assembly and is heated by conduction of heat through metal parts of the spiral groove 53. The powder is drawn into the body 47 via inlets 59a, 59b due to flow patterns caused by air from the nozzles 55.

The point 56 to which the nozzles 55 are directed is termed a 'boil' point and is positioned about two thirds the way up towards the bulk powder level (indicated by a dotted line 48a). In operation, convergence of jets of air from the nozzles 55 at the 'boil' point 56 produces a fine dispersion of powder particles in air, termed a 'smoke' which moves towards an outlet as indicated by the arrows D. A plurality of baffles 61 regulates the passage of the 'smoke' out of the body 47, improving the uniformity of the density of the 'smoke' generated by preventing localised high concentrations of powder such as may arise from the 'boil' from exiting the body 50. The baffles 61 also prevent any agglomerates or large extraneous particles from exiting the body 47.

As already indicated, the design of the generator is directed towards maintaining the body 47, powder 48 and gas at an elevated temperature. To this effect, the gas and powder are preferably preheated prior to their introduction into the body 47. St has been found that an elevated temperature of 220°C has a surprisingly beneficial effect on the smoke which can be produced.

The air pressure maintained in the manifold 54 depends on the density of smoke desired, the temperature of the generator and the number and size of the nozzles 55. It is anticipated that in the majority of applications, the air pressure used would be less than one atmosphere (in excess of ambient pressure).

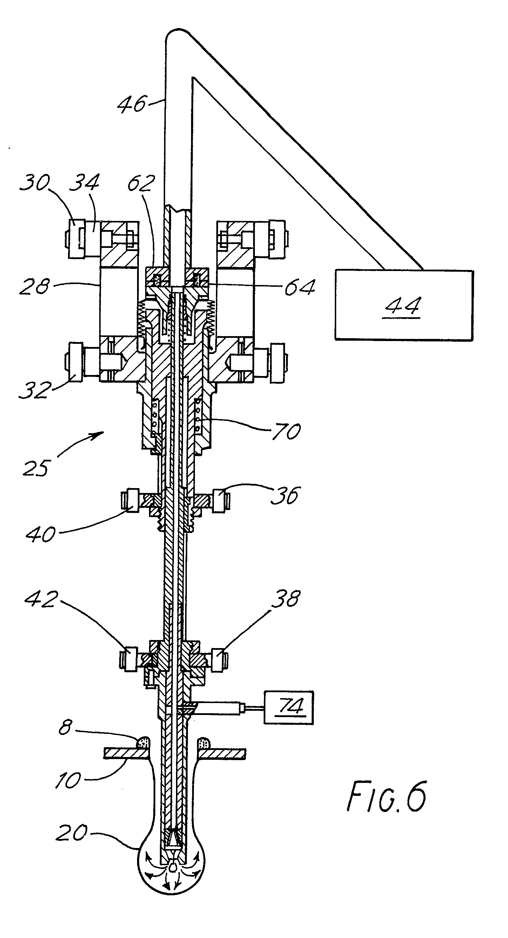

Referring to Figure 6, transfer of smoke from the distribution chamber 46 to a moving nozzle is effected by the cooperation of a slipper plate 62 at the outlet of the distribution chamber 46 and a sealing plate 64 on the nozzle assembly 25. Transfer of smoke and movement of a nozzle 26 is synchronised to movement of the belt 10 such that when the nozzle moves towards the belt 10 it is inserted into a formed glass envelope 20.

Referring back to Figure 2, as a nozzle assembly 25a emerges from the end turn of the endless chain 24 towards the belt 10, action of the rollers 40 and 42 on respective cam tracks 66 and 68 causes the nozzle 26 and the sealing plate 64 to move away from the carrier 28 and away from each other. The movement of the sealing plate 64 is arrested for a short while with the sealing plate 64 clear of the slipper plate 62. Once the sealing plate 64 is aligned with the slipper plate 62, the sealing plate 64 is cammed slightly towards the carrier 28 to allow a spring 70 in the carrier 28 to effect a seal between the slipper plate 62 and the sealing plate 64.

Meanwhile, the nozzle 26 continues moving away from the carrier 28 towards the belt 10 and is inserted into a formed glass envelope 20. At this point, the movement of the nozzle 26 away from the carrier 28 is arrested by the cam track 68. This position is maintained as smoke is injected into the glass envelope 20. Once the smoke has been injected a cam track 72 controls the movement of the nozzle 26 away from the belt 10.

Figure 3 shows the nozzle assembly 25 in the position it is maintained for the majority of the period when it is not aligned with the distribution chamber 46, with the first and second stages 40, 42 close together. Figures 4 and 6 show the nozzle assembly 25 in the fully extended position with the first and second stages 40, 42 apart from each other. It is when the nozzle assembly is moved to this position, as described hereinbefore that transfer of smoke from the distribution chamber 46 to the nozzle 26 can be effected.

As smoke passes through the nozzle 26, an electrostatic power supply 74 causes the powder particles to receive a negative electrostatic charge from a corona discharge at the tip of the nozzle. An electrostatic power supply 74 that has been used can generate a potential difference of up to 100kV with a current in the range of from 100mA to 150mA. The powder particles are accordingly attracted to the internal surface of the formed glass envelope 20 which is at an earth potential and a coating is formed.

An extraction system (not shown) may be incorporated close to the belt 10 to remove excess of smoke from the bulb neck. The excess smoke may be filtered to remove the powder particles.

The coated glass envelopes 76, still attached to the ribbon 8 are then carried to a hammer position (designated generally 78) where they are cracked from the ribbon 8 and dropped onto an annealing conveyor 80. This carries the coated glass envelopes into an annealing lehr 82 where they are annealed before further processing.

The powder particles are formed of a material, such as a soft glass, that softens at the elevated temperature of the glass envelopes as they emerge from the moulds 16 after being formed - in this instance, the elevated temperature is in the range of from 550°C to 750°C. Accordingly, the particles, on contact with the hot envelope, are heated to a sufficient temperature to melt and so adhere to the hot envelope; thus, as the envelope cools, a strong bond is formed between the particles and the glass envelope. The coating so formed is very firm and can be rubbed without any danger of it becoming detached.

The soft glass is advantageously a zinc borosilicate glass with a composition comprising by weight boron oxide ($B_2O_3$) in the range of from 25% to 40%, silicon dioxide ($SiO_2$) in the range of from 15% to 30%, zinc oxide ($ZnO$) in the range of from 12.7% to 35%, sodium fluoride ($NaF$) in the range of from 4.5% to 8% and sodium oxide ($Na_2O$) in the range of from 1.9% to 9%. The addition of fluorine as $NaF$ is convenient but the fluorine may also be added as the fluoride of one or more of the other elements present.

Such glasses can be formulated to have a sufficiently low viscosity in the temperature range stated to adhere to a glass envelope. Furthermore such glasses can be formulated to give an appropriate coefficient of thermal expansion e.g. one to match that of soda-lime-silica bulb glass compositions of which most incandescent glass envelopes are formed. Another property of such glasses which can be achieved is that they have sufficient chemical durability, e.g. they do not easily absorb or adsorb moisture, so that glass envelopes coated with powders of such glasses can be stored for significant periods of time without adverse effects.

Potassium oxide ($K_2O$) in the range of from 0 to 7% may also be added. The use of Lithium oxide ($Li_2O$) is particularly valuable to obtain low viscosity together with good chemical durability. However, there is the possibility that lithium ions could migrate from the coating into the glass envelope and set up tensile stresses, resulting in a degree of weakening of the glass envelope. Accordingly, $Li_2O$ can be used and its use does confer benefits, but it is necessary to be aware of the possiblity that the benefits of the use of $Li_2O$ may be accompanied by some weakening of the coated glass envelopes.

The properties of the soft glass can be further modified by including one or more compounds from the following Group.

4

| Compound | Range |
|----------|-------|
| Zirconium (IV) oxide (ZrO$_2$) | 0-5% |
| Aluminium oxide (Al$_2$O$_3$) | 0-7% |
| Magnesium oxide (MgO) | 0-5% |
| Tungsten (VI) oxide (WO$_3$) | 0-5% |
| Molybdenum (VI) oxide (MoO$_3$) | 0-5% |
| Barium oxide (BaO) | 0-5% |
| Calcium oxide (CaO) | 0-5% |

All the compounds listed in this group give some improvement in chemical durability; ZrO$_2$ gives the greatest benefit with Al$_2$O$_3$ and MgO also being particularly efficacious in this respect. WO$_3$ and MoO$_3$ have the effect of reducing the surface tension of the soft glass so that it flows more readily during application. If more than 3% in total of WO$_3$ and MoO$_3$ is present in the soft glass, then the soft glass can, under certain circumstances, develop a yellowish cast; however, this can be prevented by including about 5% or more of TiO$_2$ either in the soft glass itself or in a mixture incorporating soft glass powder.

The usefulness of lead (II) oxide (PbO) in soft glass compositions is well known and its incorporation would have some advantages. However, the glass is to be finely milled and applied as a suspension in air to produce a coating. The potential toxicity of lead-containing compounds is well-known and this toxicity would be enhanced by the finely divided state of the glass. It is the inventors' opinion, therefore, that the advantages conferred by the use of PbO are outweighed by the potential health risk associated with any accidental leaks of airborne suspensions of the glass powder at any stage.

Specific examples of soft glass compositions which may be used are shown below as percentages by weight. The line indicated by '=F' shows the amount of fluorine present in the composition due to the NaF.

5

| | 89Z | 89T | 89C | 93D | 42D | 89R | 73 | 93S |
|---|---|---|---|---|---|---|---|---|
| $SiO_2$ | 20 | 28.9 | 29 | 18 | 22 | 28 | 22.9 | 23.4 |
| $B_2O_3$ | 40 | 28.9 | 29 | 40 | 31 | 28 | 32.3 | 38 |
| $ZnO$ | 27 | 23.1 | 26 | 18 | 27 | 31 | 25 | 12.7 |
| $Na_2O$ | 6 | 3.8 | 2 | 2 | 4 | 7 | 5.2 | 8.3 |
| $NaF$ | 7 | 6.7 | 7 | 7 | 7 | 6 | 7.3 | 6.8 |
| $K_2O$ | – | 3.8 | 3 | 5 | 5 | – | 4.2 | – |
| $Al_2O_3$ | – | 4.8 | – | – | – | – | – | 6.8 |
| $MoO_3$ | – | – | 4 | 5 | 2 | – | – | 3.9 |
| $WoO_3$ | – | – | – | 5 | 2 | – | – | – |
| $ZrO_2$ | – | – | – | – | – | – | 3.1 | – |
| = F | 3.2 | 3.0 | 3.2 | 3.2 | 3.2 | 2.7 | 3.3 | 3.1 |
| $LiO_2$ | – | – | – | – | – | – | – | – |

6

|  | 89N | 89P | 89S | 92C | 42K | 93N | 89E | 90R |
|---|---|---|---|---|---|---|---|---|
| $SiO_2$ | 29 | 27.9 | 28.9 | 21 | 22 | 27.1 | 29 | 20 |
| $B_2O_3$ | 29 | 27.9 | 28.9 | 34.3 | 31 | 32.7 | 29 | 40 |
| ZnO | 24 | 25 | 23.1 | 25.7 | 24 | 16.8 | 26 | 27 |
| $Na_2O$ | 2 | 1.9 | 1.9 | 5.7 | 5 | 8.4 | 2 | 6 |
| NaF | 7 | 6.7 | 6.7 | 6.7 | 7 | 6.5 | 5 | 6 |
| $K_2O$ | 3 | 2.9 | 6.7 | 2.9 | 6 | 0.9 | 3 | – |
| $Al_2O_3$ | – | – | 3.8 | – | – | 4.7 | – | – |
| $MoO_3$ | 6 | 3.8 | – | 1.9 | – | 2.8 | – | – |
| $WO_3$ | – | 3.8 | – | 1.9 | 2 | – | 4 | – |
| $ZrO_2$ | – | – | – | – | 3 | – | – | – |
| = F | 3.2 | 3.0 | 3.0 | 3.0 | 3.2 | 2.9 | 2.3 | 2.7 |
| $LiO_2$ | – | – | – | – | – | – | 2 | 1 |

The soft glass can easily be prepared by a conventional melting technique. In order to facilitate subsequent milling operations to produce powders of the desired particle size, the glass should be as finely divided as possible. This can be achieved by pouring the still-molten glass into water to form a 'frit'. In order to produce the powder must be very finely divided, preferably with an average particle size of from 3μm to 4μm and with a maximum particle size of l2μm, though particles of larger size may be used. Glasses having the composition of the powder defined hereinbefore are capable of being milled down to the preferred sizes.

Additives which improve the flow characteristics ('free-flow aids') of the soft glass powder are highly desirable as they substantially improve the smoke generating characteristics of the powder. Examples of such additives include precipitated silicas, e.g. Sipernat Dl7 from Degussa Ltd. Certain additives, which would be included primarily for their whitening effect on the coating, may also possess free-flow characteristics. Such additives include an aluminosilicate material P820 from Degussa Ltd, and, to a lesser extent, $TiO_2$.

It has been found that for a P5060 (GLS) glass envelope, a large range of coating types can be achieved by the deposition of a mass of powder or mixture in the range of from 0.3g to 0.6g. In principle, this corresponds to a coating thickness approximately in the range of from 9μm to 18μm - the actual thickness of coating depends on the powder or mixture used and the temperature of application.

Modifications to the embodiment described hereinbefore and within the scope of the present invention will be apparent to those skilled in the art.

**Claims**

1. A method of manufacturing a light diffusing glass envelope including the steps of:
producing a glass envelope at an elevated temperature;
and electrostatically depositing particles of a powder on the internal surface of said glass envelope at said elevated temperature;
wherein said powder comprises an inorganic material that softens at said elevated temperature, whereby said particles adhere to said internal surface to form a coating.

2. A method according to Claim 1 wherein said step of providing a glass envelope at an elevated temperature comprises the step of forming the glass envelope from a layer of glass at said elevated temperature.

3. A method according to Claim 2 wherein the glass envelope is attached to said layer during said step of electrostatically depositing particles of a powder on said internal surface.

4. A method according to any one of the preceding claims wherein said elevated temperature is in the range of from 550°C to 750°C.

5. A method according to Claim 4 wherein said inorganic material that softens at said elevated temperature comprises a glass having a composition by weight of silicon oxide ($SiO_2$) in the range of from 15-30%, boron oxide ($B_2O_3$) in the range of from 25-40%, zinc oxide (ZnO) in the range of from 12-7 to 35% sodium oxide ($Na_2O$) in the range of from 2-9% and sodium fluoride in the range of from 4.5 to 8%.

6. A method according to any one of the preceding claims wherein said step of electrostatically depositing particles of a powder includes the step of generating said powder at another elevated temperature.

FIG.1

EP 0 359 564 A2

FIG.2

EP 0 359 564 A2

FIG.3

FIG.4

FIG.5

EP 0 359 564 A2

FIG.6